# EUROPEAN PATENT SPECIFICATION

(11) **EP 1 145 841 B1**
(45) Date of publication and mention of the grant of the patent: **20.05.2009**
(21) Application number: 98947815.1
(22) Date of filing: 12.10.1998
(51) Int. Cl.: B32B 5/12, D04H 3/04, B29C 70/20, D04H 3/12

(54) **METHOD OF FABRICATION OF A MULTI-DIRECTIONAL REINFORCING FIBER BASE FOR COMPOSITE MATERIALS**
VERFAHREN ZUR HERSTELLUNG EINES VERSTÄRKTEN FASERSUBSTRATS FÜR EINEN VERBUNDWERKSTOFF
MÉTHODE DE FABRICATION D'UN SUBSTRAT NON-TISSÉ MULTIDIRECTIONNEL DE FIBRES DE RENFORT

(43) Date of publication of application: 17.10.2001
(73) Proprietor: NITTO BOSEKI CO., LTD., Fukushima-shi, Fukushima 960-8161 (JP)
(72) Inventor: SASAKI, Yasuo, Niiza-shi, Saitama 352-0012 (JP); TANI, Haruhisa, Tokorozawa-shi, Saitama 359-1132 (JP); YAMAGUCHI, Shigeo, Fukushima-shi, Fukushima 960-8157 (JP); FUJII, Mikiya, Fukushima-shi, Fukushima 960-0102 (JP)
(74) Representative: HOFFMANN EITLE
(86) International application number: PCT/JP1998/004579
(87) International publication number: WO 2000/021742

(56) References cited:
- EP-A- 0 343 978
- DE-A- 19 809 264
- JP-A- 10 292 255
- JP-U- 61 150 891
- PATENT ABSTRACTS OF JAPAN vol. 1999, no. 02, 26 February 1999 (1999-02-26) & JP 10 292255 A (NITTO BOSEKI CO LTD;POLYMER PROCESSING RES INST), 4 November 1998 (1998-11-04)

## Description

The present invention relates to a method for producing a non-woven fabric used for fiber reinforced composite materials such as FRP (fiber reinforced plastics) and FRTP (fiber reinforced thermoplastic resins), and, particularly, to a sheet-like non-woven fabric which is superior in formability and excellent in productivity.

### Background Art

At present, FRP and FRTP are used in a wide variety of the fields as civil engineering and construction materials, structural materials of transport such as airplanes, ships and automobiles, and, besides, as electronic materials of computers and communication equipment. For satisfying these uses, various forms have been developed for reinforcing fibrous substrates used as reinforcing materials for these composite materials.

As basic forms of reinforcing fibrous substrates, there are roving, chopped strand, chopped strand mat, and woven fabric. The roving is applied to filament winding method or drawing method, and utilized for molding of tanks and pipes. The chopped strand is extensively used in the fields of injection molding or extrusion molding of thermoplastic resins, and utilized for production of automobile parts or electronic parts. The chopped strand mat is applied to hand lay-up method or SMC method and utilized for small boats, bathtubs and septic tanks, and, recently, is also applied to stamping molding method and utilized for bumpers of automobiles and the like. As for the woven fabrics, they are widely used as reinforcing materials for printed circuit boards in the case of the reinforcing fiber being glass fiber, and are used as structural materials of airplanes and the like in the case of the reinforcing fiber being carbon fiber, and the scope of the use is expanded with years.

Among the above-mentioned basic forms of the reinforcing fibrous substrates, as to the roving, the strength in winding direction is sufficiently utilized in the case of being used for hollow molded articles such as tanks and pipes, and, hence, merit of the fiber bundle form is exhibited together with the merit that content of the reinforcing fiber can be increased. However, in the case of the drawing molding, strength in the direction of arrangement of the fiber bundles can be exhibited, but strength in the direction perpendicular to the arrangement direction naturally tends to be insufficient. Therefore, the roving is not suitable for making flat and wide molded articles or cubic molded articles such as of box type.

The chopped strands are used for injection molding or extrusion molding in combination with thermoplastic resins. In the case of the injection molding or extrusion molding, content of the reinforcing fiber cannot be increased so much, and the content is usually 20-40%. Therefore, importance is attached to the use as a filler rather than a reinforcing material, and they are often used for the purpose of increasing surface hardness, heat resistance or dimensional stability.

The chopped strand mats are used for hand lay-up method in which the chopped strand mats are used as they are, for SMC method in which they are used in combination with thermosetting resins and for stamping method in which they are used in combination with thermoplastic resins. In the case of the chopped strand mats, since the chopped strands are randomly arranged, the reinforcing fibers have no directionality and, furthermore, formability is good, and, therefore, there is a merit that relatively uniform reinforcing effect can be obtained also for cubic molded articles such as bathtubs. On the other hand, there are disadvantages that since the chopped strand mats per se are bulky, content of the reinforcing fibers cannot be increased and since the reinforcing fibers are not continuous fibers, sufficient reinforcing effect cannot be obtained.

The woven fabrics are in the form of reinforcing fibrous substrates suitable in such fields as especially requiring the strength because the reinforcing fibers are continuous fibers and content of the reinforcing fibers can be made to 50-60%. Furthermore, in the case of the woven fabrics, since the reinforcing fibers are arranged in warp direction and weft direction, they are relatively well balanced in the directionality of strength. However, the woven fabrics comprise warps and wefts which are alternately intersecting above and below, and, hence, restricted in movement of the yarns and are not suitable for molded articles having a cubic shape though suitable for molded articles in the form of flat plate such as printed wiring board. That is, the woven fabrics have a defect in formability. Moreover, since the woven fabrics comprise warps and wefts which are alternately intersecting above and below to cause waviness, when a critical strength is demanded, such demand cannot be sometimes satisfied, and as to the directionality of strength, strictly speaking, there is no strength component in the oblique direction and this sometimes causes problems. For example, if a layered product of nonwoven fabrics comprising unidirectional fiber layers free from weaves is used as a reinforcing material, the tensile strength is often increased 20%. There is a further problem of impregnation of crossing portions of warps and wefts with a matrix resin. Furthermore, since production of woven fabrics includes a weaving step, there are fundamental defects that the production speed is low and the cost increases.

In addition to the above-mentioned basic forms of reinforcing fibrous substrates, various forms have been proposed depending on the shapes of composite molded articles, the molding methods, and properties of the matrix resins to be reinforced.

For example, there are a substrate made by impregnating reinforcing fibers arranged in one direction with a thermoplastic resin, followed by forming into a sheet (UD sheet), a substrate made by laminating a woven fabric of reinforcing fibers to reinforcing fibers arranged in one direction and spot bonding them or adhering or sticking a fabric-like material of rough meshes called nonwoven fabric in place of the woven fabric, and others. Furthermore, union fabrics made using reinforcing fibers as warps and thermoplastic resin fibers as wefts are also proposed.

However, the UD sheet impregnated with a thermoplastic resin is great in rigidity at room temperature, and, hence, the sheet must be previously heated in order to shape in conformity with a mold, which causes problem in handling. Furthermore, the substrate made by laminating woven fabrics, followed by spot bonding has flexibility and is good in handleability, but since it has the woven fabric on one side, there is a problem of requiring a long time in impregnation with resin.

The union fabrics of reinforcing fibers and a thermoplastic resin have flexibility and superior in handleability, but require a weaving step.

The substrates made by laminating a nonwoven fabric in place of the woven fabric solve the problem in impregnation and also the problem in handleability because they have flexibility. However, in the case of these substrates, the member providing strength is also the reinforcing fibers arranged in one direction, and, thus, they still have problems seen in unidirectional materials.

On the other hand, in the field of nonwoven fabrics, triaxial nonwoven fabrics are developed in addition to biaxial nonwoven fabrics. In nonwoven fabrics, weft materials or oblique materials are adhered to warp materials with adhesives, and biaxial nonwoven fabrics have a woven fabric-like shape. However, being different from woven fabrics, in the nonwoven fabrics, weft materials are merely placed on the warp materials, and, therefore, production speed is markedly higher as compared with the production of woven fabrics and, thus, fabrication cost can be reduced. In triaxial nonwoven fabrics, to warp materials are adhered oblique materials which intersect with each other in opposite direction, and the triaxial nonwoven fabrics are composed of warp materials and oblique materials arranged in two directions. Moreover, recently, a technique for production of tetraxial nonwoven fabrics has been developed in the field of nonwoven fabrics (JP-B-3-80911 and JP-A-8-209518).

From EP 0 343 978 a non-woven web is known which comprises a multiplicity of substantially longitudinal molecularly oriented continuous filaments of a thermoplastic polymer, and a multiplicity of melt-blown fibers or filaments deposited on the longitudinal continuous filaments. The melt-blown fibers or filaments form bonds at least at some of their intersections with the longitudinal continuous filaments to thereby stabilize and fix the longitudinal continuous filaments in the substantially longitudinal orientation.

Tetraxial nonwoven fabrics have such a structure that weft materials and oblique materials intersecting with each other in two directions are put between warp materials, and the whole of them are adhered with emulsion adhesives. In the tetraxial nonwoven fabrics, oblique materials are arranged in addition to warp materials and weft materials, and, therefore, the tetraxial nonwoven fabrics are superior to woven fabrics in directionality of strength. Moreover, since warps and wefts are not woven with each other as in woven fabrics, reinforcing fibers are directly arranged and the tetraxial nonwoven fabrics can easily exhibit reinforcing effect when they are used as reinforcing materials. Furthermore, in the case of nonwoven fabrics, since the components of warp materials, weft materials and oblique materials merely lie one upon another, degree of freedom for movement of the respective components at press molding is greater than in production of woven fabrics and, thus, nonwoven fabrics are also suitable for making molded articles of complicated shapes.

However, as mentioned above, the present nonwoven fabrics are produced by laminating the respective components, then impregnating the resulting laminate with an emulsion type treating solution, squeezing out the solution and then drying the laminate to perform adhesion of the components. Acrylate resins and others are used as the emulsion type treating solutions. Therefore, if the present nonwoven fabrics are used as reinforcing materials for FRP or FRTP, impregnation with polyester resins or epoxy resins which are matrix resins is apt to become insufficient to cause problems in flexibility.

Furthermore, there are methods for producing the present nonwoven fabrics by knitting the components of warp materials, weft materials and oblique materials with synthetic resin yarns by a knitting machine or sewing them by a sewing machine, but when the thus produced nonwoven fabrics are cut, the short fiber bundles of the end portion fall off or fall out to cause deterioration in productivity (production speed) and increase of cost. Further problem is that maintenance is needed to keep watch on occurrence of wearing or breakage of knitting needles or sewing-machine needles.

The present invention has been accomplished to solve the above problems in conventional techniques, and an object is to provide a method for producing a non-woven fabric for composite materials which is easy in impregnation with matrix resins, is superior in formability and is free from problems in handling and molding.

In short, the present invention relates to a method for producing a non-woven fabric which is as defined in claim 1.

### Construction of the non-woven fabric

Construction of the non-woven fabric for composite materials is for example, biaxial nonwoven fabric, triaxial nonwoven fabric or tetraxial nonwoven fabric, and the tetraxial nonwoven fabric is especially preferred, but there is no limitation in the construction. The "nonwoven fabric" in the present invention is a nonwoven fabric comprising linearly arranged long fiber bundles and includes a nonwoven fabric of rough meshes. The "fiber bundle layer of unidirectional reinforcing fiber bundles" in the present invention is a layer comprising a large number of fiber bundles of reinforcing fibers arranged in one direction and in parallel.

The biaxial nonwoven fabric means a nonwoven fabric comprising a first fiber bundle layer comprising a large number of reinforcing fiber bundles arranged in longitudinal direction (hereinafter sometimes referred to as "warp materials") and a second fiber bundle layer comprising a large number of reinforcing fiber bundles arranged in a direction crossing at right angles to the longitudinal direction (hereinafter sometimes referred to as "weft materials"). The triaxial nonwoven fabric means a nonwoven fabric comprising said first fiber bundle layer comprising a large number of reinforcing fiber bundles arranged in longitudinal direction, a third fiber bundle layer comprising a large number of reinforcing fiber bundles arranged in a specific direction crossing at an angle of +30 degrees, +45 degrees, +60 degrees or the like with said longitudinal direction (hereinafter sometimes referred to as "oblique materials"), and a fourth fiber bundle layer comprising a large number of reinforcing fiber bundles arranged in a direction symmetrical (with a line as an axis of symmetry) to the angle of the third fiber bundle layer, namely, at an angle of -30 degrees, -45 degrees, -60 degrees or the like with said longitudinal direction (hereinafter sometimes referred to as "oblique materials"). Furthermore, the "tetraxial nonwoven fabric" means a nonwoven fabric comprising the above first, second, third and fourth fiber bundle layers. In the tetraxial nonwoven fabric, it is preferred that the second, third and fourth fiber bundle layers are sandwiched between the first fiber bundle layers.

Basis weight of the nonwoven fabric is preferably 100-4000 g/m², more preferably 250-2500 g/m².

The nonwoven fabrics used in the present invention can be produced by the methods disclosed in U.S.Patent No.3,761,345, JP-B-3-80991 and JP-A-8-209518, or by MULTI-AXIAL composite fabric making machine manufactured by American LIBA INC., and the like.

### <Reinforcing fiber bundle>

As the reinforcing fiber bundle used in the present invention, mention may be made of multifilament yarns of glass fibers, carbon fibers, alumina fibers, aramid fibers and the like which are used as reinforcing materials for FRP and FRTP. In the case of impregnating with a thermoplastic resin to use as FRP, it is preferred to use untwisted fiber bundles which are easy in impregnation with the resin.

Diameter of the filaments constituting the reinforcing fiber bundle can be in the range of 3-25 µ m, and as to the number of the filaments, 100-25000 reinforcing fibers can be used. Thickness (count) of the fiber bundle is suitably 570-2200 g/1000 m in the case of glass fiber bundle, and 200-4400 g/1000 m in the case of carbon fibers or aramid fiber bundle.

The reinforcing fibers used for the tetraxial nonwoven fabrics of the present invention may comprise not only one kind of fibers, but also a combination of two or more kinds of fibers. For example, there may be employed a combination of carbon fibers as warp materials and glass fibers as weft materials and oblique materials. The counts of the respective materials are not needed to be the same, and can be changed in accordance with the desired properties of molded articles.

The reinforcing fibers used in the present invention can be made into a fiber bundle with changing the kind of bundling treatment depending on the kind of the matrix resin to be reinforced. For example, glass fibers can be made into a fiber bundle by treating with a bundling agent containing methacrylsilane when the resin to be reinforced is a polyester resin, and can be made into a fiber bundle by treating with a bundling agent containing epoxysilane when the resin to be reinforced is an epoxy resin.

### <Thermoplastic resin component>

The non-woven fabric for composite materials is characterized in that the respective fiber bundle layers are bonded to each other with a thermoplastic resin component which is randomly and partially adhered to the surface of the reinforcing fiber bundles of at least one fiber bundle layer.

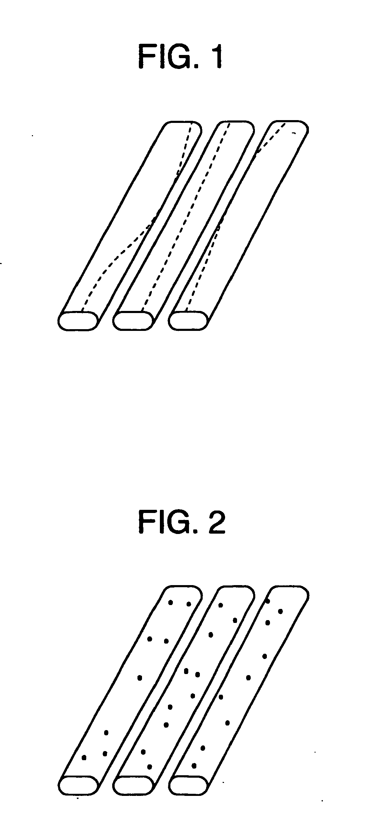

Here, "a thermoplastic resin component is randomly and partially adhered to the surface of the reinforcing fiber bundles of the fiber bundle layer" means that the thermoplastic resin component is adhered at random to a part of the surface of the reinforcing fiber bundles. Furthermore, "randomly" means that the thermoplastic resin component is irregularly adhered to unspecified positions of the surface of the fiber bundles in the fiber bundle layer. Therefore, "randomly and partially adhered state" in the present invention does not include the case where the thermoplastic resin is adhered to the whole surface of the fiber bundles, the case where the thermoplastic resin is adhered regularly to have a specific form or pattern, and the case where the thermoplastic resin is adhered to the surface of the fiber bundles by using a thin thermoplastic resin fiber sheet, a thin thermoplastic resin sheet or the like. Thus, since in the present invention the thermoplastic resin component is randomly and partially adhered to the surface of the fiber bundles, if the thermoplastic resin component is present at crossing points of the fiber bundle layers, these layers are bonded to each other at the crossing points, whereas if the thermoplastic resin component is absent at crossing points, the layers are merely laminated. Such bonding state results in improvement in balance of bond strength and formability between the laminated fiber bundles, and it becomes possible to increase much the degree of freedom for movement of fibers at molding with keeping the bond strength at constant. As a result, there is obtained a reinforcing fibrous substrate which is high in flexibility of the substrate per se and is applicable to production of molded articles of complicated shapes. Specifically, there are examples where the thermoplastic resin component is adhered to the peripheral surface of the fiber bundles in such a state as shown in FIG. 1 and FIG. 2, and such state can be attained using thermoplastic resin fibers obtained by making a thermoplastic resin into fibers or thermoplastic resin powders obtained by making a thermoplastic resin into powders. That is, FIG. 1 shows the state of the thermoplastic resin component being linearly adhered to the surface of the fiber bundles when thermoplastic resin fibers are used as the thermoplastic resin component. FIG. 2 shows the state of the thermoplastic resin component being adhered in the form of spots to the surface of the fiber bundles when thermoplastic resin powders are used as the thermoplastic resin component. In FIGS. 1 and 2, the thermoplastic resin fibers are illustrated by broken lines and the thermoplastic resin powders are illustrated by the spots which are painted black.

As the thermoplastic resins, there may be used those which have a melting temperature of preferably about 80-150°C, more preferably about 100-130°C.

The thermoplastic resin fibers include, for example, copolymer nylons, copolymer polyesters and copolymer acrylic esters, and examples of the copolymer nylons are copolymers such as nylon 6, nylon 66, nylon 12 and nylon 610. The thermoplastic resin fibers preferably have a count of 10-50 g/1000 m and more preferably have a count of 25-40 g/1000 m. In the case of fiber bundles of a large count or nonwoven fabrics of rough meshes, not only one, but also a plurality (2-3) of thermoplastic resin fibers per one fiber bundle can be used. For linearly adhering the thermoplastic resin fibers, there are a method of arranging the reinforcing fiber bundle and the thermoplastic resin fiber in one direction and heating them by passing through a circulating hot air heating oven, an infrared oven or a far infrared oven by an apparatus such as a conveyor, thereby adhering the softened or molten thermoplastic resin fiber to the reinforcing fibers, a method of arranging the reinforcing fiber bundle and the thermoplastic resin fiber in one direction, heating them in close contact with a heating roll and cooling them by a cooling roll, and other methods. As is clear from FIG. 1, the thermoplastic resin fibers are randomly adhered to the fiber bundles. When a plurality of the thermoplastic resin fibers per one fiber bundle are used, the respective fibers are arranged at different positions such as upper, lower, left and right positions of the fiber bundle to assure adhesion of the fiber bundles to each other.

The thermoplastic resin powders include, for example, unsaturated polyester resin powders, alkyd resin powders or the like which have a particle size of 50-200 mesh. For adhering the thermoplastic resin powders in the form of spots, there is a method of sprinkling the powders on the fiber bundle layer in an amount of about 4-5 g/m² using a known vibrating feeder, a revolving roll feeder or the like which can feed a constant amount of the powders in a given width and at a thin thickness. According to another method, the thermoplastic resin powders can be previously heat fused onto the fiber bundles. When the thermoplastic resin powders are used, the nonwoven fabric is preferably not rough in meshes.

The proportion of the content of the thermoplastic resin and that of the reinforcing fiber bundle is preferably 0.4-10% by weight of the thermoplastic resin component and 90-99.6% by weight of the reinforcing fiber bundle, and more preferably 2-5% by weight of the thermoplastic resin component and 95-98% by weight of the reinforcing fiber bundle. And further, the lower content of the thermoplastic resin component is preferred. If the ratio of the thermoplastic resin component is lower than the above range, bond strength is insufficient, and if it is higher than the above range, the portions of the nonwoven fabric impregnated with the thermoplastic resin increases to cause decrease in impregnation speed of a matrix resin and increase in possibility of occurrence of failure in impregnation with a liquid matrix resin.

### <Method for production of non-woven fabric for composite materials>

As mentioned above, the production method of the present invention is characterized by arranging reinforcing fiber bundles and thermoplastic resin fibers in one direction, placing a large number of the resulting bundles in parallel to form a fiber bundle layer of unidirectional reinforcing fiber bundles, stacking the fiber bundle layer with a fiber bundle layer of reinforcing fiber bundles so that the layers are different in directions of the bundles from each other, and heating and pressing the fiber bundle layers stacked in layers to bond the fiber bundle layers to each other, or arranging reinforcing fiber bundles in one direction, placing a large number of the resulting bundles in parallel to form a fiber bundle layer of unidirectional reinforcing fiber bundles, sprinkling thermoplastic resin powders between the fiber bundle layers differing in directions of the bundles from each other, then stacking these fiber bundle layers, and heating and pressing the fiber bundle layers stacked in layers to bond the fiber bundle layers to each other.

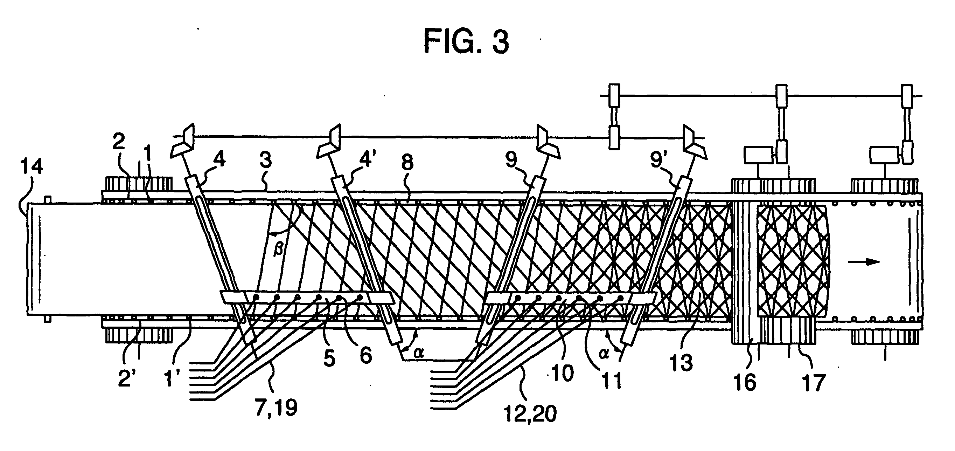

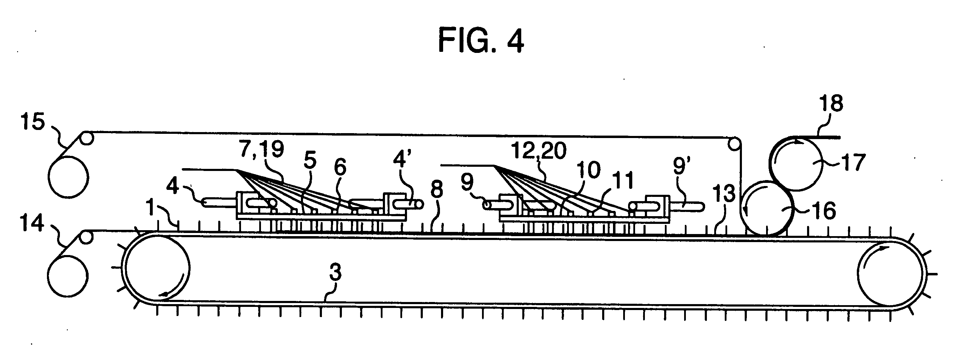

As a specific example, a method for producing a non-woven fabric comprising a tetraxial nonwoven fabric using the thermoplastic resin fibers as the thermoplastic resin will be explained referring to FIG. 3 and FIG. 4. In FIG. 3 and FIG. 4, a circulating conveyor 3 having pin rows 2, 2' in which yarn catching pins 1, 1' are disposed at a constant pitch at left and right in longitudinal direction is moved forward in machine direction. Above the conveyor, there are provided tracks 4, 4' (two in one set) which are in parallel to each other and cross the conveyor obliquely at a given angle α and a traverse guide 5 which is parallel to the machine direction and of which both ends are supported slidably by the tracks, and the traverse guide is reciprocated along the tracks. A plurality of guides 6 comprising fine tubes are disposed in the traverse guide 5 in a line at the same pitch and in the same direction as the pins of the conveyor, and a large number of reinforcing fibers 7 are fed together with thermoplastic resin fibers 19 onto the conveyor 3 through the guides 6.

Whenever the same number of the pins of conveyor 3 as the number of the reinforcing fibers move forward, the traverse guide 5 is reciprocated once and the respective yarns are caught by the left and right pins 1, 1' at the time of turning of direction of the traverse guide, thereby forming a body 8 comprising a large number of oblique yarns between the left and right pin rows 2, 2'. In this case, the angle β in FIG. 3 can be made to a right angle by adjusting the angle α and the speed of the conveyor 3 and the traverse guide 5.

Furthermore, tracks 9, 9' similar to the tracks 4, 4' are provided above the conveyor 3 so as to form an angle of 180-α with the machine direction, and a traverse guide 10 having guides 11 is provided so that it can slidably reciprocate between the tracks 9, 9'. A large number of reinforcing fibers 12 are fed together with thermoplastic resin fibers 20 through the guides 11 to form the similar body comprising oblique yarns between the pin rows 2, 2'. The two bodies comprising oblique yarns are laminated to form a body 13 comprising a combination of the weft materials with the oblique materials crossing in two directions.

FIG. 4 is a side view of FIG. 3 to which warp materials 14, 15 are added. Warp materials 14, 15 are fed in such a manner that they hold the combination body 13 therebetween, and the combination body 13 with being held between the warp materials 14, 15 is removed from the pins at the position of hot roller 16, and heated in close contact with the hot roller and these are press bonded by press roller 17 to form a tetraxial nonwoven fabric 18.

The thermoplastic resin fibers 19, 20 are fed simultaneously along with a large number of the reinforcing fibers 7, 12, respectively. The thermoplastic resin fibers can also be fed along with the warp materials 14, 15.

In FIG. 4, the warp materials are fed from the upper and lower sides of the combination body 13, but, in some case, the combination body 13 can be allowed to contact with the hot roller only by the warp materials 14 fed from the lower side, and thus a tetraxial nonwoven fabric having the warp materials on only one side can also be obtained.

The apparatus shown in FIG. 3 and FIG. 4 can produce not only the tetraxial nonwoven fabric, but also the triaxial nonwoven fabric.

The heating conditions of the fiber bundle layers is not limited as far as the heating temperature is a temperature at which the thermoplastic resin component is molten, for example, 120-200°C, and this temperature varies depending on the kind of the resin, the speed of the production line and the thickness of the fiber bundle layer. The heating temperature is desirably such as providing a preferred molten state, which is, for example, such a state that the thermoplastic resin fibers or powders are molten to such an extent as nearly keeping the fiber or powder state but not spreading over the surface of the reinforcing fiber bundles in the form of a film which inhibits impregnation with the matrix resin. The pressing conditions of the fiber bundles may be usual conditions, and there are no problems as far as they can be pressed and fixed by a cooling roll or the like after the melting.

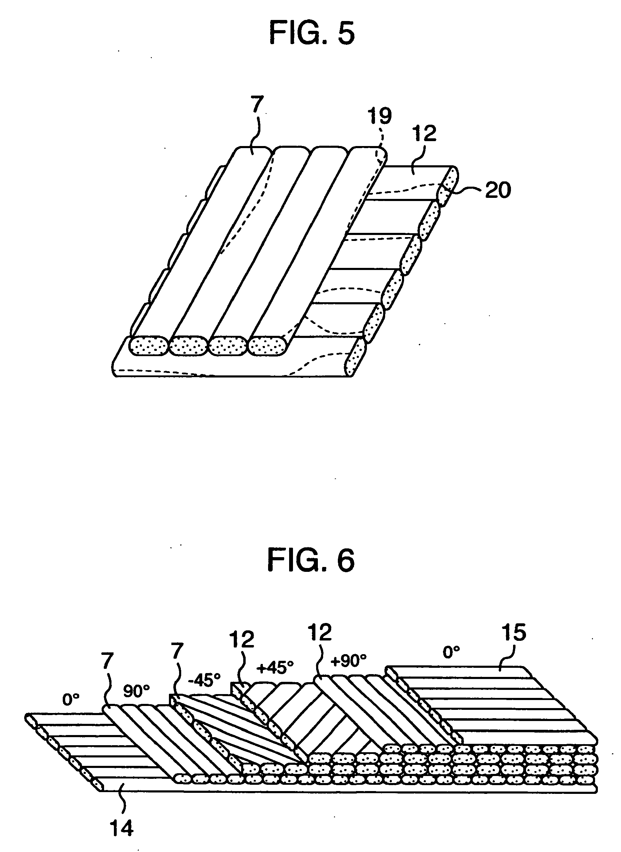

Structure of the thus obtained reinforcing fibrous composite substrate is shown in FIG. 5 and FIG. 6. As is clear from FIG. 5, the fiber bundle layers are bonded to each other with the thermoplastic resin fibers adhered partially (linearly) to the surface of the fiber bundles.

### Brief Description of Drawings

FIG. 1 shows the state of adhesion of thermoplastic resin fibers to reinforcing fiber bundles when thermoplastic resin fibers are used as the thermoplastic resin component.
FIG. 2 shows the state of adhesion of thermoplastic resin to reinforcing fiber bundles when thermoplastic resin powders are used as the thermoplastic resin component which is not part of the invention.
FIG. 3 is a plan view of an apparatus for producing the non-woven fabric for composite materials of the present invention (triaxial or tetraxial nonwoven fabric) using thermoplastic resin fibers (a device for feeding warps 15 and warps 14 are not shown).
FIG. 4 is a side view of an apparatus for producing the reinforcing fibrous substrate for composite materials of the present invention (triaxial or tetraxial nonwoven fabric) using thermoplastic resin fibers.
FIG. 5 is an enlarged view showing the state of bonding of the fiber bundles to each other when thermoplastic resin fibers are used.
FIG. 6 shows the state of bonding of the fiber bundles to each other when thermoplastic resin fibers are used.

### Best Mode for Carrying Out the Invention

### <Example 1>

Glass fiber bundles (RS 110QL manufactured by Nitto Boseki Co., Ltd.; count: 1100 g/1000 m, filament diameter: 16 µm) were used as warp materials, weft materials and oblique materials.

Copolymer nylon (melting point: 100-120°C, count: 33 g/1000 m) was used as thermoplastic resin fibers, and the thermoplastic resin fibers were fed along the fiber bundles at the time of feeding of the weft materials and the oblique materials. The thermoplastic fibers were not fed along the warp materials. The weight of the thermoplastic resin fibers was 2.4% by weight based on the reinforcing fiber bundle.

Using the apparatus shown in FIG. 3 and FIG. 4, the weft materials and the oblique materials were sandwiched between the warp materials disposed above and below and these were passed between hot press rollers, thereby melting the copolymer nylon fed together with the weft materials and the oblique materials and linearly bonding the materials to each other to obtain a tetraxial nonwoven fabric.

Basis weight of the resulting tetraxial nonwoven fabric was 770 g/m², and the number of the respective arranged materials were 20/10 cm in warp direction, 19/10 cm in weft direction, and 14/10 cm in both the oblique directions.

### <Example 2>

Using the same glass roving as used in Example 1, a tetraxial nonwoven fabric was produced in the same manner as in Example 1, except that the thermoplastic resin fibers were not used and 5 g/m² of thermoplastic resin powders (NEWTLAC 514 manufactured by Kao Atlas Co., Ltd.) were sprinkled between the respective layers.

### <Comparative Example 1>

A tetraxial nonwoven fabric was produced in the same manner as in Example 1, except that the thermoplastic resin component used in Example 1 was not used, and after the weft materials and the oblique materials were sandwiched with the warp materials, the sandwich was dipped in an acrylic emulsion, followed by squeezing by press rollers and drying to bond them.

### <Comparative Example 2>

A glass roving cloth of the same weight as of the tetraxial nonwoven fabric of Example 1 was produced.

### <Production of laminate>

Four tetraxial nonwoven fabrics obtained in each of Example 1, Example 2 and Comparative Example 1 were laminated, respectively and laminates of 2 mm in thickness were obtained using three kinds of a polyamide resin, an epoxy resin and an unsaturated polyester resin. As to Comparative Example 2, the laminate was produced using only an unsaturated polyester resin. Composition of each resin and method for the production of the laminates are as follows.

### Polyamide resin

A nylon 6 film (80 µm thick) was used as the polyamide resin, and a laminate was obtained by putting the film on both sides of the layered product comprising the four tetraxial nonwoven fabrics and between the nonwoven fabrics and hot pressing them under the conditions of temperature: 280°C, time: 20 minutes and pressure: 15 kg/cm².

### Epoxy resin

The nonwoven fabrics were impregnated with the following epoxy resin and dried to form a prepreg, followed by hot pressing at 100°C for 20 minutes.

| | |
|---|---|
| Araldite (AW136H manufactured by Ciba-Geigy Corp.) | 100 parts |
| Curing agent (HY994 manufactured by Ciba-Geigy Corp.) | 40 parts |

### Unsaturated polyester resin

The tetraxial nonwoven fabrics (glass roving cloths in Comparative Example 2) were impregnated with the following resin, followed by pressing at 25°C for 60 minutes to obtain a laminate.

| | |
|---|---|
| o-Phthalic acid-based polyester | 100 parts |
| BPO | 1 part |
| Cobalt naphthenate | 0.1 part |

Content of the glass fibers in the resulting laminate was 50% by volume. The appearance of each laminate was visually observed. Since the acrylic resin is adhered in the form of a film on the surface of the fiber bundles of the tetraxial nonwoven fabrics in Comparative Example 1, impregnation with the matrix resin was insufficient and the laminate was unsuitable for practical use.

### <Appearance of the laminates>

The laminates obtained in Example 1 and Example 2 were transparent in all the cases of using polyamide resin, epoxy resin and polyester resin. The laminates of Comparative Example 1 were insufficient in impregnation and whitened.

### <Strength of the laminates>

Measurement of flexural strengths in warp, weft and oblique directions was conducted on the laminates prepared by using the tetraxial nonwoven fabrics of Example 1 and Comparative Example 1. The measurement was conducted in accordance with JIS K 7055. The results of measurement are shown in Table 1. The flexural strength of the laminates prepared by using the tetraxial nonwoven fabrics of Example 2 was nearly the same as of Example 1.

Furthermore, measurement of interlaminar shear strength in warp, weft and oblique directions was conducted on the laminates prepared by using the tetraxial nonwoven fabrics of Example 1 and the glass roving cloths of Comparative Example 2. The measurement was conducted in accordance with JIS K 7057. The results of measurement are shown in Table 2. As can be seen from the results of Table 2, the laminates using the tetraxial nonwoven fabrics of the present invention were higher in the interlaminar shear strength as compared with the laminates using the roving cloths, and can give molded articles such as panels and cylinders which are strong against torsion.

**Table 1**

| Resin | Direction | Flexural strength (kgf/mm²) | |
|---|---|---|---|
| | | Example 1 | Comparative Example 1 |
| | 0° | 58 | 35 |
| Polyamide | 45° | 40 | 26 |
| | 90° | 47 | 33 |
| | 0° | 56 | 39 |
| Epoxy | 45° | 42 | 27 |
| | 90° | 50 | 33 |
| | 0° | 44 | 26 |
| Polyester | 45° | 34 | 24 |
| | 90° | 42 | 27 |

| | | | |
|---|---|---|---|
| Measuring method: JIS K 7055 | | | |

**Table 2**

| Resin | Direction | Interlaminar shear strength (kgf/mm²) | |
|---|---|---|---|
| | | Example 1 | Comparative Example 2 |
| Polyester | 0° | 2.6 | 2.2 |
| | 45° | 2.6 | 1.7 |
| | 90° | 2.4 | 2.0 |

| | | | |
|---|---|---|---|
| Measuring method: JIS K 7057 | | | |

### <Formability of the laminate impregnated with thermoplastic resin>

In order to examine the formability of the thermoplastic resin-impregnated laminates comprising the tetraxial nonwoven fabrics of Example 1 or the roving cloths of Comparative Example 2 which was impregnated with the polyamide resin, each laminate was preheated and put in a hemispherical mold, followed by hot pressing to make a hemispherical molded article (15 cm in diameter), and state of the reinforcing fiber bundles was observed.

In the case of the molded article made from the laminate of Example 1, no wrinkles were seen in the molded articles and no partial slippage or cracks are seen in the warp materials, the weft materials and the oblique materials of the tetraxial nonwoven fabrics which were reinforcing materials, and thus the molded articles were in satisfactory state. On the other hand, in the case of the molded article made from the laminate of Comparative Example 2, partial wrinkles occurred and the warps and wefts of the cloths, which were reinforcing materials, slipped to produce portions comprising only the warps or wefts.

It is presumed that this is because in the case of the cloths (woven fabrics), they cannot stretch in warp and weft direction and can deform only in oblique direction, while in the case of the tetraxial nonwoven fabrics, since the respective materials are merely laminated, the materials can freely move in the respective directions.

### Industrial Applicability

Since in the non-woven fabric for composite materials, the fiber bundles are partially bonded to each other with a small amount of a thermoplastic resin component, impregnation with matrix resin is satisfactory and both of thermosetting and thermoplastic resins can be employed. Furthermore, in the non-woven fabric for composite materials, since there is no need to provide reservoirs for resin at the crossing portions of the warps and wefts which are needed in woven fabrics, content of the reinforcing fibers can be increased and composite materials excellent in mechanical characteristics can be provided.

In addition, in the non-woven fabric for composite materials , since the fiber bundles are merely laminated and bonded, the degree of freedom for movement of fibers at the time of molding is considerably great and the substrate per se is flexible and superior in formability, and thus can be applied to the production of molded articles of complicated shapes.

Moreover, when tetraxial nonwoven fabrics are used for the reinforcing fibrous substrates for composite materials, the continuous reinforcing fibers are linearly arranged in warp direction, weft direction and two oblique directions, and hence composite materials less in difference of strength depending on the directions and very high in reinforcing effect can be obtained.

Further, the non-woven fabric for composite materials of the present invention is cut in conformity with the mold by scissors at the site where the substrate is formed by impregnation with resin and lamination, and since the yarns in the respective directions are partially bonded by fusion of the thermoplastic resin fibers, there is obtained the effect that falling off of the fiber bundles hardly occurs as compared with multi-axial nonwoven fabrics made by fixing many fiber bundles by sewing them together with a sawing machine or by knitting, in which are conventionally carried out. In addition, since there is no restraint with weaves of yarns or knitting yarns, fiber opening properties are good and smooth surface can be easily obtained.

Furthermore, since production of the tetraxial nonwoven fabrics does not need the weaving step, there are exhibited industrially very advantageous effects that production speed can be increased and fabrication cost can be reduced.

## Claims

1. A method for producing a non woven fabric which has at least three fibre bundle layers comprising unidirectional reinforcing fibre bundles, the method comprised of:
feeding reinforcing fibre bundles together with thermoplastic resin fibres and arranging the reinforcing fibre bundles and the,thermoplastic resin fibres together in one direction;
placing the resulting bundles together with the thermoplastic resin fibres in parallel to form a fibre bundle layer of unidirectional reinforcing fibre bundles together with the thermoplastic resin fibres;
stacking the fibre bundle layer with a fibre bundle layer of reinforcing fibre bundles together with the thermoplastic resin fibres so that the layers are different in directions of the bundles from each other; and
heating and pressing the fibre bundle layers stacked in layers to bond the fibre bundle layers to each other with the thermoplastic resin fibres, thereby to produce the non-woven fabric.

2. The method according to Claim 1, wherein a first fibre bundle layer is arranged in a longitudinal direction, a second fibre bundle layer is arranged in a direction crossing at an angle of +30°, +45° or +60° with said longitudinal direction, and a third fibre bundle layer arranged in a direction symmetrical to the angle of the second fibre bundle layer.

3. The method according to Claim 2, wherein a tetraaxial nonwoven fabric contains continuous reinforcing fibres which are lineally arranged in warp direction, weft direction and two oblique directions.

## Patentansprüche

1. Verfahren zur Erzeugung eines Vliesstoffes, der zumindest drei Faserbündelschichten aufweist, umfassend unidirektionale verstärkende Faserbündel, wobei das Verfahren umfasst:
Zuführen von verstärkenden Faserbündeln zusammen mit thermoplastischen Harzfasern und Anordnen der verstärkenden Faserbündel und der thermoplastischen Harzfasern zusammen in einer Richtung;
Anordnen der resultierenden Bündel zusammen mit den thermoplastischen Harzfasern parallel zueinander, zur Erzeugung einer Faserbündelschicht aus unidirektionalen verstärkenden Faserbündeln zusammen mit den thermoplastischen Harzfasern;
Stapeln der Faserbündelschicht mit einer Faserbündelschicht aus verstärkenden Faserbündeln zusammen mit den thermoplastischen Harzfasern, so dass die Schichten unterschiedliche Richtungen der Bündel voneinander haben; und
Erwärmen und Pressen der Faserbündelschichten, die in Schichten gestapelt sind, zum Binden der Faserbündelschichten aneinander mit den thermoplastischen Harzfasern, unter Erzeugung des Vliesstoffes.

2. Verfahren nach Anspruch 1, worin eine erste Faserbündelschicht in einer Längsrichtung angeordnet ist, eine zweite Faserbündelschicht in einer Richtung angeordnet ist, die die Längsrichtung bei einem Winkel von +30°, +45° oder +60° kreuzt, und eine dritte Faserbündelschicht in einer Richtung symmetrisch zum Winkel der zweiten Faserbündelschicht angeordnet ist.

3. Verfahren nach Anspruch 2, worin ein tetraaxialer Vliesstoff kontinuierliche verstärkende Fasern enthält, die linear in Kettrichtung, Schussrichtung und zwei dazu geneigten Richtungen angeordnet sind.

## Revendications

1. Procédé de production d'un tissu non tissé comportant au moins trois couches de faisceaux de fibres comprenant des faisceaux unidirectionnels de fibres de renfort, le procédé comprenant les étapes suivantes :
introduction de faisceaux de fibres de renfort conjointement avec des fibres de résine thermoplastique, et disposition des faisceaux de fibres de renfort et des fibres de résine thermoplastique conjointement selon une seule direction ;
placement des faisceaux obtenus conjointement avec les fibres de résine thermoplastique en parallèle, afin de former une couche de faisceaux de fibres constitué de faisceaux unidirectionnels de fibres de renfort conjointement avec les fibres de résine thermoplastique ;
empilement de la couche de faisceaux de fibres avec une couche de faisceaux de fibres constituée de faisceaux de fibres de renfort conjointement avec les fibres de résine thermoplastique, afin que les couches soient différentes les unes des autres dans les directions des faisceaux; et
chauffage et pressage des couches de faisceaux de fibres empilées en couches, afin de lier les couches de faisceaux de fibres les unes aux autres avec les fibres de résine thermoplastique, produisant ainsi le tissu non tissé.

2. Procédé selon la revendication 1, dans lequel une première couche de faisceaux de fibres est disposée suivant une direction longitudinale, une deuxième couche de faisceaux de fibres est disposée suivant une direction croisant ladite direction longitudinale selon un angle de + 30°, + 45° ou +60°, et une troisième couche de faisceaux de fibres disposée suivant une direction symétrique par rapport à l'angle de la deuxième couche de faisceaux de fibres.

3. Procédé selon la revendication 2, dans lequel un tissu non tissé tétra-axial contient des fibres continues de renfort qui sont disposées linéairement suivant une direction de chaîne, une direction de trame et deux directions obliques.
